# EUROPEAN PATENT SPECIFICATION

(11) **EP 0 473 177 B1**
(45) Date of publication and mention of the grant of the patent: **03.05.1995**
(21) Application number: 91114602.5
(22) Date of filing: 30.08.1991
(51) Int. Cl.: B23C 5/10

(54) **End mill**
Fingerfräser
Fraise à queue

(30) Priority: 31.08.1990 JP 91374/90
(43) Date of publication of application: 04.03.1992
(73) Proprietor: MITSUBISHI MATERIALS CORPORATION, Chiyoda-ku, Tokyo (JP)
(72) Inventor: Fukuoka, Hitoshi, Gifu-Seisakusho, Mitsubishi, Goudo-cho, Anpachi-gun, Gifu-ken (JP); Kodera, Yuichi, Gifu-Seisakusho, Mitsubishi, Goudo-cho, Anpachi-gun, Gifu-ken (JP)
(74) Representative: Füchsle, Klaus, Dipl.-Ing.

(56) References cited:
- EP-A- 0 298 154
- EP-A- 0 307 840
- DE-A- 3 727 968
- DE-A- 3 800 747

## Description

The present invention relates to an end mill according to the precharacterising part of claim 1 (see DE-A-37 27 968) adapted to be used for machine-cutting inner areas, to shape grooves or slots, and machine-cut outer areas to shape peripheral configurations. More particularly, the present invention relates to an end mill having a construction wherein cutting inserts or tips comprising a plurality of shorter cutting insert elements, including at least one layer of super hard sintered body, such as diamond and cubic boron nitride (CBN), which are secured to the tool body of the end mill by a predetermined fixing method such as brazing.

In machine-cutting utilizing a conventional end mill, the highest possible cutting speed was considered to be around 160 mpm with the end mill having a diameter of 15 mm since the maximum main spindle revolution of machine tools was limited to around 4,000 rpm.

Recently, efforts to increase the main spindle revolution of machine tools have been made as a part of extensive programs for increasing machine-cutting speeds, and have resulted in certain main spindle revolutions being increased to as high as 10,000 to 20,000 rpm. Subsequently, it is now possible to increase the cutting speed of an end mill to as high as 400 to 500 mpm. This improvement in the cutting speed has also revealed certain disadvantage as follows. In machine-cutting under such a high range of cutting speeds, conventional end mills utilizing cutting inserts comprising a hard sintered body, such as hard metal, lack abrasion resistance in the cutting edges thereof, and subsequently the life time thereof tends to be shortened.

In order to cope with the requirements for endurance through such high speed machine-cutting, certain end mills have been presented that utilize a super hard sintered body, such as diamond and cubic crystallized boron nitride (CBN), in the cutting edge portion.

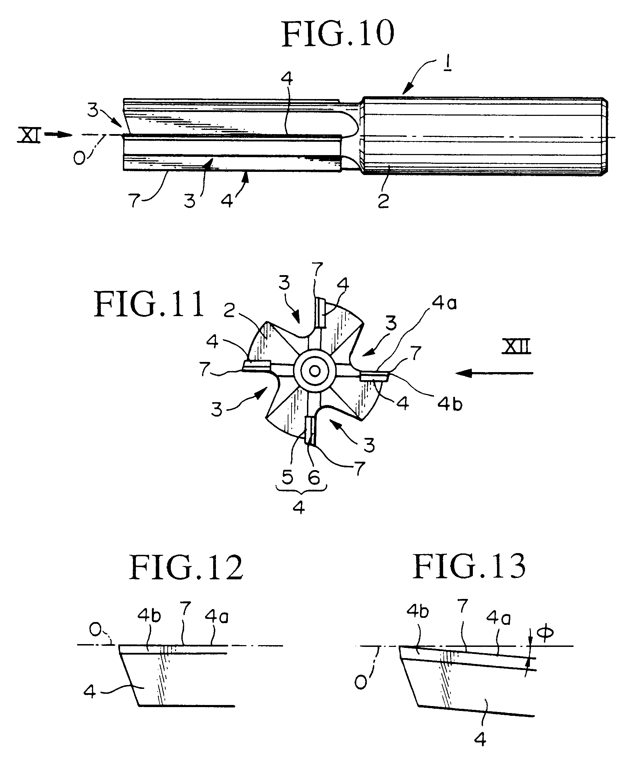

An example of such end mills is shown in Figs. 10 to 12, in which an end mill 1 comprises a tool body 2, made of steel or cemented carbide, having a generally cylindrical column shape. The tool body 2 has four straight grooves 3, formed on the circumferential surface of the tool body 2, extending in parallel with the axis O from one end towards the other end of the tool body 2. Each of the grooves 3 has straight flat plate shaped cutting inserts 4, secured by brazing to a wall of the groove 3, facing the direction of rotation of the tool body 2, along substantially all the length of the groove 3. Each of the cutting inserts 4 has a lamination comprising a layer of hard sintered body 5, such as hard metal, and a layer of super hard sintered body 6, such as diamond and cubic boron nitride (CBN). The cutting inserts 4 are disposed so that the cutting edge 7 thereof faces toward the external circumference of the tool body 2. Then the cutting inserts are integrated with the tool body 2 into one body, by having the layer of the hard sintered body 5 brazed to the tool body 2.

In the conventional end mill described above, the rake face 4a of the cutting inserts 4 is not finished in spiral shape. Because grinding along a spiral surface of the super hard sintered body 6 for such a length, is hard to achieve, though not impossible, due to the extreme hardness of the rake face material 6. Therefore, the cutting inserts 4, including the rake face 4a, are disposed to be straight and in parallel with the axis O of the tool body 2, whereby the grooves of the conventional end mill described above are also straight and in parallel with the axis O of the tool body 2 in order to accommodate the cutting inserts 4. Thus, the finishing work for the cutting inserts 4 of the conventional end mill only includes finishing the portion of circumferential flank 4b by grinding, with the rake face 4a being left unground as a planar surface configuration which was formed when the cutting inserts 4 were formed. Even if one attempts to spirally form the rake face 4a by grinding, the grinding depth tends not to be constant due to the rake face 4a being originally formed flat, and resulting in a possible grinding beyond the thickness of the layer of the super hard sintered body 6.

Furthermore, in the case where the rake face 4a is disposed in parallel with the axis O of the tool body 2, as described above, the axial rake angle of the cutting edge 7 is zero degrees. Subsequently, the cutting resistance increases, whereby chattering vibrations occur, resulting in an inevitable decrease in the cutting accuracy.

In order to improve the situations of the axial rake angle being zero degrees, it is possible to provide the cutting edge 7 with a rake angle to some extent. This is accomplished by having the cutting inserts 4 secured by brazing at the axial rake angle φ with the axis O of the tool body 2, as shown in Fig. 13, whereby the grooves are also formed to have an angle φ with the axis O of the tool body 2.

In this case, however, the grooves are not formed spirally along the external circumference of the tool body 2. Rather, they are formed only to be straight by slitting the external circumference of the tool body 2 with a straight plane at an angle φ with the axis O of the tool body 2. This arrangement, therefore, has a disadvantage in that, the greater the angle φ of the cutting edge 7, the thinner the remaining unslitted portion of the tool body 2 behind or under the cutting insert 4 becomes at the rear end (the right end in Fig. 10) of the cutting inserts 4, thereby decreasing the tool rigidity. This disadvantage, thus, limits the tolerable extent of the axial rake angle φ from the view of securing the tool rigidity. Such a tolerable extent of the axial rake angle φ is 2 to 5 degrees for an end mill having a diameter of 15 mm and a cutting edge length of 50 mm.

### SUMMARY OF THE INVENTION

Therefore, an object of the present invention is to provide an end mill that can have an ample axial rake angle for a cutting insert comprising a super hard sintered body, whereby an increase in the reduction of the cutting resistance and a restrained chattering vibration are obtained in comparison with the conventional end mill described above.

According to the present invention, an end mill having the features of claim 1 is provided which comprises a tool body having a generally cylindrical column shape. The tool body has a plurality of grooves formed in a spiral shape at a predetermined angle around the axis on the circumferential surface in the generally axial direction from one end toward the other end. Each of the grooves has a plurality of cutting insert elements disposed on a wall, generally facing forward in the direction of rotation of the tool body, so that the cutting edge of the cutting insert elements faces toward the external circumference of the tool body. The cutting insert elements comprise at least one layer of hard cutting material. Each of the grooves has the cutting insert elements secured by a predetermined fixing method to the wall. The grooves comprise a first group of grooves, including at least one of the spirally formed grooves, wherein each of the first group of grooves has a first, predetermined number, of the cutting insert elements disposed therein with a first predetermined spacing along the wall, in the direction of the spirally formed grooves. The grooves further comprise a second group of grooves, which includes the remainder of the spirally formed grooves. The second group of grooves have a second predetermined number of the cutting insert elements disposed therein, with a second predetermined spacing along the wall in the direction of the spirally formed grooves. The second predetermined number of the cutting insert elements are further disposed so that the rotational locus of the cutting edges of the second predetermined number of the cutting insert elements overlaps each end of the rotational locus of corresponding cutting edges of the first predetermined number of the cutting insert elements disposed along the first group of grooves.

In the end mills of the present invention as described above, the length of the cutting insert elements may be arranged to be substantially shorter than the length of the groove, in which the cutting insert elements are secured. Thus, the rake face of the cutting insert elements comprising a hard cutting material, such as a super hard sintered body, can be relatively easily formed by grinding. Thus, the cutting edge can now be provided with an ample rake angle of positive side by finishing the rake face of each of the cutting insert elements in accordance with the spiral shape of the groove. In so doing, cutting resistance can be decreased to restrain the occurrence of the chattering vibration, resulting in a significant improvement in the cutting accuracy compared with the conventional end mills described above.

### BRIEF DESCRIPTION OF THE DRAWINGS

Fig. 1 is a side view of an end mill in accordance with an embodiment of the present invention;
Fig. 2 is an end view of the end mill of Fig. 1, seen in the direction indicated by the arrow II in Fig. 1;
Fig. 3 is a bottom view of the end mill of Fig. 1, seen in the direction indicated by the arrow III in Fig. 1;
Fig. 4 is a partially developed view of grooves at the circumference of a tool body with cutting insert elements secured to the end mill of Fig. 1;
Fig. 5 is an enlarged cross-sectional view of the end mill of Fig. 1, taken along the line V-V in Fig. 1;
Fig. 6 is a side view of an end mill in accordance with a second embodiment of the present invention;
Fig. 7 is an end view of the end mill of Fig. 6, seen in the direction indicated by the arrow VII in Fig. 6;
Fig. 8 is a partially developed view of grooves at the circumference of a tool body with cutting insert elements secured to the end mill of Fig. 6;
Fig. 9 is a bottom view of the end mill of Fig. 6, seen in the direction indicated by the arrow VIII in Fig. 6;
Fig. 10 is a side view of a conventional end mill;
Fig. 11 is an end view of the end mill of Fig. 10, seen in the direction indicated by the arrow XI in Fig. 10;
Fig. 12 is an enlarged partial view of a cutting insert of the end mill of Fig. 10, seen in the direction indicated by the arrow XII in Fig 11;
Fig. 13 is an enlarged partial view similar to Fig. 12 of a variation of the end mill of Fig. 10, with the cutting inserts disposed at a slant angle with the axis of the tool.

### DESCRIPTION OF THE PREFERRED EMBODIMENTS OF THE INVENTION

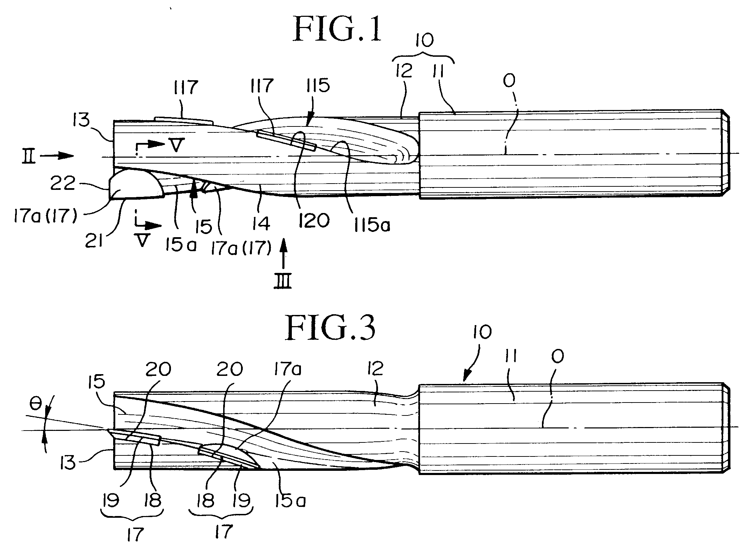

Figs. 1 to 5 depict an end mill in accordance with an embodiment of the present invention. As shown in Figs. 1 to 3, the end mill of the embodiment comprises a tool body 10, made of a metal such as steel, and a hard metal. The tool body 10 comprises a cylindrical column shaped shank, 11 adapted for holding the end mill therewith, the shank 11 having a cutting edge portion 12 concentrically formed at one end thereof. The cutting edge portion 12 has a diameter slightly smaller than the diameter of the shank 11.

The cutting edge portion 12 has a plurality (two in this embodiment) of grooves 15, 115 formed on the circumferential surface 14, so that the grooves 15, 115 are equally spaced circumferentially with each other: The grooves 15, 115 are disposed in the generally axial direction, from one end far from the shank 11, to the other end near the shank 11 of the cutting edge portion 12, having an opening to the tool front end 13, far from the shank 11 and to the circumferential surface of the cutting edge portion 12.

Each of the grooves 15, 115 are formed in a spiral shape at a spiral angle τ (respectively 10 degrees in this embodiment), around the axis O of the tool body. Although the spiral angle τ may be appropriately determined in accordance with such cutting conditions as the tool diameter and the material of the work-to-be-cut, its preferable range is between 5 to 45 degrees. If the spiral angle τ is smaller than 5 degrees, the desirable effect of the decrease in cutting resistance to be obtained from the spiralization of the grooves may not be significant. On the other hand, if the spiral angle τ is greater than 45 degrees, the cutting insert elements to be secured to the grooves cannot choose but have a significantly short length because longer insert elements of hard cutting material are not suitable for finishing a rake face thereon in spiral shape by grinding. Thus, such significantly short insert elements may cause a shorter durability. The arrangement of cutting insert elements with the spirally formed grooves of the tool body, in accordance with the present invention, will be discussed in detail below.

Then, as shown in Figs. 1 to 4, a first group of grooves comprising at least one (one groove 15 in this embodiment) of the two spirally formed grooves 15, 115 has a wall 15a facing forward in the direction of rotation of the tool body 11. The wall 15a has three cutting insert elements 17 disposed equally spaced with each other along the wall 15a in the direction of the spirally formed groove 15. A a second group of grooves comprising the remainder (one groove 115 in this embodiment) of the two spirally formed grooves 15, 115 has a wall 115a facing forward in the direction of rotation of the tool body 11. The wall 115a has two cutting insert elements 117 disposed equally spaced with each other along the wall 115a in the direction of the spirally formed groove 115. Each of the cutting insert elements 17, 117 comprises a lamination of a layer of a hard sintered body 18, 118 such as hard metal, and a layer of a super hard sintered body 19, 119, such as diamond and cubic boron nitride (CBN). The cutting insert elements 17, 117 have the lamination formed as a semicircular flat plane configuration. The walls 15a, 115a have recesses 20, 120 formed to match the configuration and positions of the layer of a hard sintered body 18 of the cutting insert elements 17, 117. The walls 15a, 115a have the cutting insert elements 17, 117 fitted in the recesses 20, 120 and secured to the walls 15a, 115a by brazing to form one single integrated body with the tool body 10.

The cutting insert element 17, 117 has a rake face 17a, 117a constituted on a surface on the upper side of the super hard sintered body 19, 119. The cutting insert element 17, 117 is further disposed on the wall 15a or 115a, so that the rake face 17a, 117a slightly protrudes from the wall 15a or 115a. To form a spiral face along the wall 15a or 115a of the groove 15 or 115, the rake face 17a, 117a is further finished by grinding after brazing. The rake face 17a is arranged to protrude from the wall 15a or 115a in order that any unnecessary grinding into the adjacent wall 15a or 115a is avoided while the rake face 17a, 117a is being ground. The height of the protrusion is set to 0.5 mm in this embodiment.

The cutting insert elements 17, 117 respectively have a cutting edge 21, 121 constituted on a ridge of the layer of a super hard sintered body 19, 119, adjoining the rake face 17a, 117a and facing toward the external circumference of the tool body 10. The cutting insert elements 17, 117 are further disposed on the walls 15, 115, so that each of the cutting edges 21, 121 of the cutting insert elements 17, 117 protrudes for a length equal to each other from the circumferential surface 14 of the cutting edge portion 12.

In addition, one of the cutting insert elements 17, which is disposed at the front end 13 of the tool body 10, has an end cutting edge 22 constituted on a ridge of the super hard sintered body 19, adjoining the rake face 17a and facing forward in the axial direction of the tool body 10. The cutting insert element 17, disposed at the front end 13 of the tool body 10, has the end cutting edge 22 protruding for a predetermined length from the front end 13 of the tool body 10.

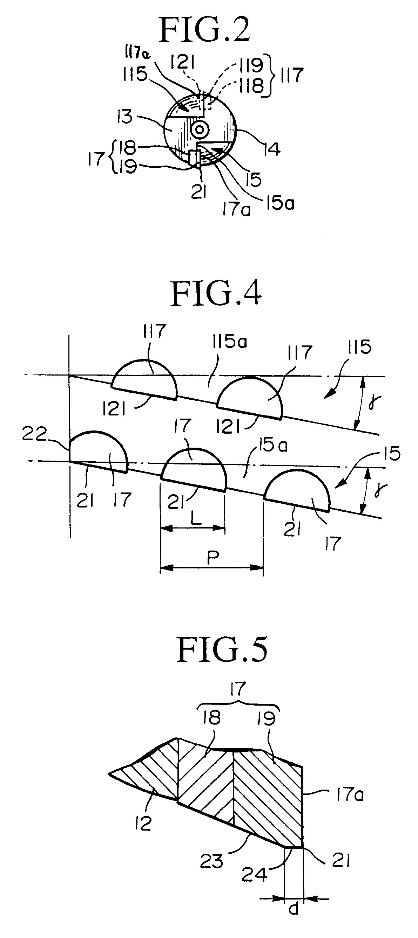

In Fig. 2, since the cutting insert element 17 disposed in the groove 15 at the front end 13 of the tool body 10, it is shown in solid lines because this cutting insert element 17 can be seen in the direction of arrow II. In addition, for a better understanding of the arrangement of the grooves and the cutting insert elements, the cutting insert element 117, disposed closest to the front end 13 of the tool body 10 in the groove 115, is shown in phantom lines, as if the cutting insert elements 117, disposed closest to the front end 13 of the tool body 10 in the groove 115, is located at the front end 13 of the tool body 10.

As shown in Fig. 5, a side face of each of the cutting insert elements 17, adjoining the cutting edge 21 and, facing radially outward from the external circumference 14 of the tool body 10, has an external circumferential flank 23 constituted thereon. The external circumferential flank 23 recedes radially toward the axis of the tool body 10 as the external circumferential flank 23 proceeds circumferentially away from the cutting edge 21.

As further shown in Fig. 5, the cutting insert element 17 of this embodiment has a marginal surface 24 formed between the cutting edge 21 and the external circumferential flank 23 of the cutting insert element 17, so that the marginal surface 24 convexly curves along the rotational locus of the cutting edge 21 for a predetermined circumferential length "d". The circumferential length "d" of the marginal surface 24 may be appropriately determined in accordance with the tool body diameter, but its preferable value is not greater than 0.05 mm. The reason for such a preferred arrangement is that, if the circumferential length "d" of the marginal surface 24 is greater than 0.05 mm, the cutting resistance at the cutting edge 21 increases, whereby a chattering vibration is induced and subsequently the cutting accuracy tends to decrease.

Now, a complementary arrangement of the cutting insert elements 17 and 117 respectively disposed in the first group of groove and the second group of grooves will be described, according to the present embodiment. The cutting insert elements 17 disposed along the first group of grooves (the groove 15 in this embodiment) are disposed so that the pitch between two adjacent cutting insert elements 17 does not exceed a distance "2L", where "L" stands for the length of the cutting edge 21 of the cutting insert elements 17. The cutting insert elements 117 disposed along the second group of grooves (the groove 115 in this embodiment) are disposed so that the rotational or cylindrical locus formed by revolving, around the axis O of the tool body 10, the cutting edges 121 of the cutting insert elements 117 disposed along the groove 115, overlaps, at each end thereof, the rotational or cylindrical locus formed by revolving, around the axis O of the tool body 10, the cutting edges 21 of the cutting insert elements 17 disposed along the groove 15. Thus, according to this arrangement of the cutting insert elements 17 and 117, the rotational or cylindrical locus formed by the cutting edges 121 of the cutting insert elements 117 disposed along the grooves 115 cooperates with the rotational or cylindrical locus formed by the cutting edges 21 of the cutting insert elements 17 disposed along the grooves 15. Subsequently, a combination of the two cooperating rotational or cylindrical loci constitutes an uninterrupted cylindrical locus along an entire length of the cutting edge portion 12, inspite of the intermittent disposition of cutting insert elements 17, 117 along the grooves 15, 115.

In an end mill of the present embodiment formed in accordance with the above description, the cutting insert elements 17, 117 have a substantially short length, in comparison with each length of the spiral grooves 15 and 115. The rake faces 17a, 117a also have a significantly small area. Therefore, finishing the rake face 17a, 117a by grinding can be done easily and in a shorter time, as in comparison with the case of conventional end mills, in which rake faces extend substantially along the entire length of the grooves. Also, since the rake faces 17a are smaller, the grinding depth from the original surface of the rake face 17a, 117a is substantially constant across the rake face 17a, though the original configuration of the rake face 17a, 117a has a flat surface before the grinding to obtain a spiral-faced surface. And, an undesirable grinding beyond the thickness of the layer of the super hard sintered body 19, 119 would not occur. Furthermore, since a substantially constant thickness in the tool body 10 is maintained behind each of the cutting insert elements 17, a lack of tool rigidity would not even partially occur.

The cutting insert elements 17 have a substantially shorter cutting edge length L, compared with conventional end mills, due to a plurality of smaller cutting insert elements 17 being arranged spaced apart for an easier grinding of the rake face of the cutting insert elements 17. Subsequently, the arrangement described above is adapted to maintain an aggregated total cutting edge length of the cutting insert elements 17 at substantially the same length as in the case of the conventional end mills. The arrangement substantially covers a full length of the grooves 15, 115, in which the cutting insert elements 117 disposed along the groove 115 cooperate with the cutting insert elements 17 disposed along the groove 15, so that the rotational or cylindrical locus formed by the cutting edges 121 of the cutting insert elements 117 disposed along the groove 115 and the rotational or cylindrical locus formed by the cutting edges 21 of the cutting insert elements 17 disposed along the groove 15 overlap and constitute an uninterrupted cylindrical locus along an entire length of the cutting edge portion 12, as described above.

Since, according to the present invention, the rake face 17a, 117a of each of the cutting insert elements 17, 117 is formed to have a spiral-faced surface extending along the spirally formed grooves 15, 115, the cutting edge 21, 121 of the cutting insert elements 17, 117 can be provided with an axial rake angle ϑ of a positive side larger than in the case of conventional end mills, and in accordance with the spiral angle τ of the spirally formed grooves 15 and 115. The cutting resistance can thereby be decreased to restrain chattering vibrations, resulting in a significant improvement in cutting accuracy.

Furthermore, in accordance with the present embodiment, since the circumferential length "d" of the marginal surface 24, which is formed between the cutting edge 21 and the external circumferential flank 23 of the cutting insert element 17, shown in Fig. 5, is limited to 0.05 mm, cutting resistance is further decreased, resulting in a far more improved cutting accuracy. As shown in Figs. 1 to 5, according to actual cutting tests conducted with an end mill, having a tool diameter of 15 mm and a total cutting edge length of 45 mm, cutting accuracy of a straightness of 0.02 and a surface roughness Rmax of 50S measured according to Japanese Industrial Standard JIS B 0601 (1976) was obtained.

In accordance with the present embodiment, an end mill has been described above which has two grooves 15, 115 spirally formed in a tool body 10, with the groove 15 considered as the first group of grooves and the groove 115 considered as the second group of grooves. However, the present invention is not limited to the present embodiment, but is naturally applicable to end mills having three or more grooves.

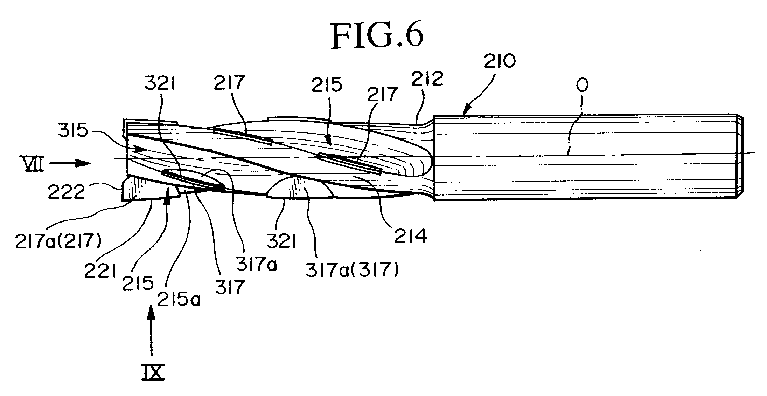

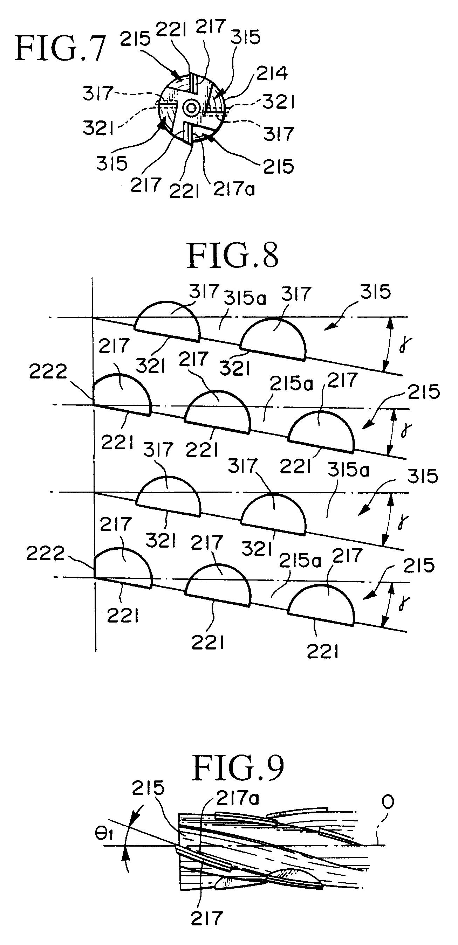

For example, Figs. 6 to 8 depict an end mill according to a second embodiment of the present invention, in which a first group of two spirally formed grooves 215, 215, and a second group of two spirally formed grooves 315, 315, are alternately disposed circumferentially, equally spaced with each other along the external circumference 214 of the cutting edge portion 212. The grooves, in a total number of four 215, 315, 215, 315, respectively, extend substantially along the axial direction of the tool body 110. The first group of grooves 215, 215 have three cutting insert elements 217 disposed along a wall 215a thereof and brazed to the wall 215a. Similarly, the second group of grooves 315, 315 have two cutting insert elements 317 disposed along a wall 315a thereof and brazed to the wall 315a. The arrangement of the cutting tool elements 217, 317 along the grooves 215, 315 are respectively similar to the arrangement of the cutting tool elements 17, 117 in the grooves 15, 115 of the first embodiment shown in Figs. 1 to 5.

Also, in the second embodiment, in a manner similar to the first embodiment, the cutting edge 21 of the cutting insert elements 17 can be provided with an axial rake angle ϑ₁ of the positive side, whereby cutting resistance can be decreased to restrain chattering vibrations, resulting in significant improvement of cutting accuracy.

In the second embodiment described above having a total number of four grooves, two oppositely disposed grooves 215, 215 and remaining two grooves 315, 315 are designated as the first and second groups of grooves, respectively. In the case of grooves total four in number, however, it may easily be understood that either one or three of the four grooves instead of two may be designated as a first group of grooves with three cutting insert elements disposed thereon, and the remaining three or one of the four grooves may be designated as a second group of grooves with two cutting insert elements disposed thereon.

In the embodiments of the present invention described above, three cutting insert elements 17, 217 are disposed along the grooves of a first group 15, 215 and two cutting insert elements 117, 317 are disposed along the grooves of a second group 115, 315. However, the present invention is not limited to such embodiments, but is naturally applicable to cases where different number of cutting insert elements if and when the number of the cutting insert elements is appropriately designated to respective corresponding grooves.

Furthermore, in the embodiments of the present invention described above, each of the cutting insert elements 17, 117, 217, 317 is adapted to comprise a lamination of a layer of a super hard sintered body 19, 119, 219, 319, such as diamond and cubic boron nitride (CBN), over a layer of a hard sintered body 18, 118, 218, 318, such as hard metal. The cutting insert elements 17, 117, 217, 317 have a semicircular flat plane configuration, the cutting insert elements being secured to the tool body by brazing. However, the present invention is not limited to such embodiments, but is applicable to: the cases where the cutting insert elements comprise a number of layers other than two, such as one single layer, of material(s) suitable for high speed, high accuracy, and long durability cutting; the cases where the cutting insert elements have a configuration other than semicircular, such as rectangular or square; and the cases wherein the cutting insert elements are secured to the tool body by a predetermined fixing method other than brazing, for example, welding.

Reference signs in the claims are intended for better understanding and shall not limit the scope.

## Claims

1. An end mill comprising a tool body (10, 210) having a generally cylindrical column shape,
said tool body (10, 210) having a plurality of grooves (15. 115, 215, 315) formed in a spiral shape at a predetermined angle around the axis thereof on the circumferential surface (14, 214) thereof in the generally axial direction from one end toward the other end thereof;
each of said grooves (15, 115, 215, 315) having a plurality of cutting insert elements (17, 117, 217, 317) disposed on a wall (15a, 115a, 215a, 315a) thereof generally facing forward in the direction of rotation of said tool body (10, 210) so that the cutting edge (21, 121, 221, 321) of said cutting insert elements (17, 117, 217, 317) faces toward the external circumference of said tool body (10, 210), said cutting insert elements (17, 117, 217, 317) comprising at least one layer of a hard cutting material (18, 19, 118, 119, 218, 219, 318, 319);
said grooves (15, 115, 215, 315) comprising:
a first group of grooves (15, 215) including at least one of said spirally formed grooves, each of said first group of grooves (15, 215) having a first predetermined number of said cutting insert elements (17, 217) disposed therein and
a second group of grooves (115, 315) including the remainder of said spirally formed grooves, each of said second group of grooves (115, 315) having a second predetermined number of said cutting insert elements (117, 317) disposed therein
characterized in that: the first cutting inserts have a first predetermined spacing along said wall (15a, 215a) thereof in the direction of said spirally formed grooves (15, 215) and the second cutting inserts have a second predetermined spacing along said wall (115a, 315a) thereof in the direction of said spirally formed grooves (115, 315);
said second predetermined number of said cutting insert elements (117, 317) being further disposed so that the cutting edges (121, 321) of each of said second predetermined number of said cutting insert elements (117, 317) overlap at each end thereof the rotational locus of corresponding cutting edges (21, 221) of said first predetermined number of said cutting insert clements (17, 217): and
said cutting insert elements (17, 117, 217, 317) having a rake face (17a, 117a, 217a, 317a) formed to have a spiral-faced surface extending along said spirally formed grooves (15, 115, 215, 315).

2. An end mill according to claim 1 characterized in that: each of said cutting insert elements (17) has a marginal surface (24) formed between said cutting edge (21) and the external circumferential flank (23) thereof so that said marginal surface (24) convexly curves along the rotational locus of said cutting edge (21) thereof with a predetermined circumferential length thereof being not more than 0.05 mm.

3. An end mill according to claim 1 or 2, characterized in that: said end mill has each of said grooves (15, 115, 215, 315) further formed in a spiral shape at an angle in a range of 5 to 45 degrees around the axis of said tool body.

4. An end mill according to claim 1, 2 or 3, characterized in that: each of said cutting insert element (17, 117, 217, 317) comprises a lamination of layer of a super hard sintered body (19, 119, 219, 319) over a layer of a hard sintered body (18, 118, 218, 318).

5. An end mill according to claim 1, 2, 3 or 4, wherein said predetermined fixing method is brazing.

6. An end mill according to claim 1, 2, 3, 4 or 5, characterized in that: said first group of grooves includes one groove (15), and said second group of grooves includes one groove (215).

7. An end mill according to claim 1, 2, 3, 4 or 5, characterized in that: said first group of grooves includes two grooves (215, 215) and said second group of grooves includes two grooves (315, 315).

8. An end mill according to claim 1, 2, 3, 4 or 5, characterized in that: said first group of grooves includes one groove, and said second group of grooves includes three grooves.

9. An end mill according to claim 1, 2, 3, 4 or 5, characterized in that: said first group of grooves includes three grooves, and said second group of grooves includes one groove.

## Patentansprüche

1. Schaftfräser, umfassend einen Werkzeugkörper (10, 210) mit einer allgemein zylindrischen Säulenform,
wobei der besagte Werkzeugkörper (10, 210) eine Mehrzahl von Nuten (15, 115, 215, 315) aufweist, die in einer Spiralform unter einem vorbestimmten Winkel um seine Achse herum auf seiner Umfangsfläche (14, 214) in der allgemein axialen Richtung von einem Ende aus auf sein anderes Ende zu ausgebildet sind;
wobei jede der besagten Nuten (15, 115, 215, 315) eine Mehrzahl von Schneideinsatzelementen (17, 117, 217, 317) aufweist, die auf einer Wand (15a, 115a, 215a, 315a) derselben angeordnet sind, welche in Drehrichtung des besagten Werkzeugkörpers (10, 210) allgemein nach vorne weist, so daß die Schneidkante (21, 121, 221, 321) der besagten Schneideinsatzelemente (17, 117, 217, 317) in Richtung des äußeren Umfangs des besagten Werkzeugkörpers (10, 210) weist, wobei die besagten Schneideinsatzelemente (17, 117, 217, 317) mindestens eine Schicht aus einem harten Schneidmaterial (18, 19, 118, 119, 218, 219, 318, 319) umfassen;
wobei die besagten Nuten (15, 115, 215, 315) umfassen:
eine erste Gruppe von Nuten (15, 215), welche mindestens eine der besagten spiralförmig ausgebildeten Nuten einschließt, wobei jede der besagten ersten Gruppe von Nuten (15, 215) eine erste vorbestimmte Anzahl der besagten Schneideinsatzelemente (17, 217) aufweist, die darin angeordnet ist, und
eine zweite Gruppe von Nuten (115, 315), welche den Rest der besagten spiralförmig ausgebildeten Nuten einschließt, wobei jede der besagten zweiten Gruppe von Nuten (115, 315) eine zweite vorbestimmte Anzahl der besagten Schneideinsatzelemente (117, 317) aufweist, die darin angeordnet ist;
dadurch gekennzeichnet, daß die ersten Schneideinsätze in Richtung der besagten spiralförmig ausgebildeten Nuten (15, 215) eine erste vorbestimmte Beabstandung entlang von deren besagter Wand (15a, 215a) aufweisen, und die zweiten Schneideinsätze in Richtung der besagten spiralförmig ausgebildeten Nuten (115, 315) eine zweite vorbestimmte Beabstandung entlang von deren besagter Wand (115a, 315a) aufweisen;
wobei die besagte zweite vorbestimmte Anzahl der besagten Schneideinsatzelemente (117, 317) weiter so angeordnet ist, daß sich die Schneidkanten (121, 321) von jeder der besagten zweiten vorbestimmten Anzahl der besagten Schneideinsatzelemente (117, 317) an jedem Ende derselben mit der Rotationskurve von entsprechenden Schneidkanten (21, 221) der besagten ersten vorbestimmten Anzahl der besagten Schneideinsatzelemente (17, 217) überlappen; und
wobei die besagten Schneideinsatzelemente (17, 117, 217, 317) eine Spanfläche (17a, 117a, 217a, 317a) aufweisen, die so ausgebildet ist, daß sie eine Oberfläche mit einer Spiralfläche aufweist, welche sich entlang der besagten spiralförmig ausgebildeten Nuten (15, 115, 215, 315) erstreckt.

2. Schaftfräser nach Anspruch 1, dadurch gekennzeichnet, daß: jedes der besagten Schneideinsatzelemente (17) eine Randoberfläche (24) aufweist, die zwischen der besagten Schneidkante (21) und ihrer äußeren Umfangsflanke (23) ausgebildet ist, so daß sich die besagte Randoberfläche (24) entlang der Rotationskurve ihrer besagten Schneidkante (21) konvex krümmt, wobei eine vorbestimmte Umfangslänge derselben nicht mehr als 0,05 mm beträgt.

3. Schaftfräser nach Anspruch 1 oder 2, dadurch gekennzeichnet, daß: bei dem besagten Schaftfräser jede der besagten Nuten (15, 115, 215, 315) weiter in einer Spiralform unter einem Winkel in einem Bereich von 5 bis 45 Grad um die Achse des besagten Werkzeugkörpers herum ausgebildet ist.

4. Schaftfräser nach Anspruch 1, 2 oder 3, dadurch gekennzeichnet, daß: jedes der besagten Schneideinsatzelemente (17, 117, 217, 317) einen Schichtaufbau aus einer Schicht aus einem superharten gesinterten Körper (19, 119, 219, 319) über einer Schicht aus einem harten gesinterten Körper (18, 118, 218, 318) umfaßt.

5. Schaftfräser nach Anspruch 1, 2, 3 oder 4, dadurch gekennzeichnet, daß das besagte vorbestimmte Befestigungsverfahren Löten ist.

6. Schaftfräser nach Anspruch 1, 2, 3, 4 oder 5, dadurch gekennzeichnet, daß: die besagte erste Gruppe von Nuten eine Nut (15) einschließt, und die besagte zweite Gruppe von Nuten eine Nut (215) einschließt.

7. Schaftfräser nach Anspruch 1, 2, 3, 4 oder 5, dadurch gekennzeichnet, daß: die besagte erste Gruppe von Nuten zwei Nuten (215, 215) einschließt, und die besagte zweite Gruppe von Nuten zwei Nuten (315, 315) einschließt.

8. Schaftfräser nach Anspruch 1, 2, 3, 4 oder 5, dadurch gekennzeichnet, daß: die besagte erste Gruppe von Nuten eine Nut einschließt, und die besagte zweite Gruppe von Nuten drei Nuten einschließt.

9. Schaftfräser nach Anspruch 1, 2, 3, 4 oder 5, dadurch gekennzeichnet, daß: die besagte erste Gruppe von Nuten drei Nuten einschließt, und die besagte zweite Gruppe von Nuten eine Nut einschließt.

## Revendications

1. Fraise à queue comprenant un corps d'outil (10, 210) possédant une forme de colonne généralement cylindrique,
ledit corps d'outil (10, 210) comportant une pluralité de rainures (15, 115, 215, 315) formées en hélice selon un angle prédéterminé autour de leur axe sur la surface circonférentielle (14, 214) de celui-ci dans la direction généralement axiale partant d'une première extrémité vers l'autre exrémité de celui-ci,
chacune desdites rainures (15, 115, 215, 315) comportant une pluralité d'éléments de plaquette (17, 117, 217, 317) disposés sur une paroi (15a, 115a, 215a, 315a) de ceux-ci disposés généralement en regard vers l'avant dans le sens de rotation dudit corps d'outil (10, 210) de sorte que l'arête coupante (21, 121, 221, 321) desdits éléments de plaquette (17, 117, 217, 317) se trouve en regard vers la circonférence externe dudit corps d'outil (10, 210), lesdits éléments de plaquette (17, 117, 217, 317) comprenant au moins une couche de matériau de coupe dur (18, 19, 118, 119, 218, 219, 318, 319),
lesdites rainures (15, 115, 215, 315) comprenant :
un premier groupe de rainures (15, 215) incluant au moins l'une desdites rainures formées en hélice, chacune dudit premier groupe de rainures (15, 215) incluant un premier nombre prédéterminé desdits éléments de plaquette (17, 217), et
un second groupe de rainures (115, 315) incluant le restant desdites rainures formées en hélice chacune dudit deuxième groupe de rainures (115, 315) incluant un second nombre prédéterminé desdits éléments de plaquette rapportés (117, 317),
caractérisée en ce que les premières plaquettes comportent un premier espacement prédéterminé suivant ladite paroi (15a, 215a) de celui-ci dans la direction desdites rainures formées en hélice (15, 215), et les secondes plaquettes comportent un second espacement prédéterminé le long de ladite paroi (115a, 315a) celui-ci étant dans la direction desdites rainures formées en hélice (115, 315),
ledit second nombre prédéterminé desdits éléments de plaquette (117, 317) étant en outre disposé d'une manière telle que les arêtes coupantes (121, 321) de chacun desdits seconds nombres prédéterminés desdits éléments de plaquette (117, 317) chevauchent à chaque extrémité de ceux-ci l'enveloppe rotationnelle des arêtes coupantes correspondantes (21, 221) dudit premier nombre prédéterminé desdits éléments de plaquette (17, 217), et
lesdits éléments de plaquette (17, 117, 217, 317) comportant une face de dépouille (17a, 117a, 217a, 317a) formée pour comprendre une surface formée en hélice s'étendant le long desdites rainures formées en hélice (15, 115, 215, 315).

2. Fraise à queue selon la revendication 1, caractérisée en ce que : chacun desdits éléments de plaquette (17) comprend une surface marginale (24) formée entre ladite arête coupante (21) et le flanc circonférentiel externe (23) de celui-ci de sorte que ladite surface marginale (24) s'incurve d'une manière convexe le long de l'enveloppe rotationnelle dudit bord de coupe (21) de celui-ci avec une longueur circonférentielle prédéterminée ne dépassant pas plus de 0,05 mm.

3. Fraise à queue selon la revendication 1 ou 2, caractérisée en ce que : ladite fraise à queue comporte chacune desdites rainures (15, 115, 215, 315) formée en outre en hélice suivant un angle situé dans une plage de 5 à 45 degrés autour de l'axe dudit corps d'outil.

4. Fraise à queue selon la revendication 1, 2 ou 3, caractérisée en ce que : chacun desdits éléments de plaquette rapportés (17, 117, 217, 317) comprend une lamination d'une couche d'un corps fritté super dur (19, 119, 219, 319) sur une couche d'un corps fritté dur (18, 118, 218, 318).

5. Fraise à queue selon la revendication 1, 2, 3 ou 4, dans laquelle ledit procédé de fixation prédéterminé est le brasage.

6. Fraise à queue selon la revendication 1, 2, 3, 4 ou 5, caractérisée en ce que : ledit premier groupe de rainures comprend une rainure (15) et en ce que ledit second groupe de rainures comprend une rainure (215).

7. Fraise à queue selon la revendication 1, 2, 3, 4, ou 5, caractérisée en ce que : ledit premier groupe de rainures comprend deux rainures (215, 215) et en ce que ledit second groupe de rainures comprend deux rainures (315, 315).

8. Fraise à queue selon la revendication 1, 2, 3, 4 ou 5, caractérisée en ce que : ledit premier groupe de rainures comprend une seule rainure et en ce que ledit second groupe de rainures comprend trois rainures.

9. Fraise à queue selon la revendication 1, 2, 3, 4 ou 5, caractérisée en ce que : ledit premier groupe de rainures comprend trois rainures et en ce que ledit second groupe de rainures comprend une rainure.
